# EUROPEAN PATENT APPLICATION

(11) **EP 4 832 480 A1**
(43) Date of publication of application: **28.10.2026**
(21) Application number: 23961817.6
(22) Date of filing: 20.12.2023
(51) Int. Cl.: H04N 13/289

(54) **IMAGE PROCESSING METHOD, IMAGE CAPTURING DEVICE, IMAGE DISPLAY DEVICE, AND PLATFORM**

(71) Applicant: SZ Shanzhi Technology Co., Ltd., Shenzhen, Guangdong 518000 (CN)
(72) Inventor: RAO, Xiongbin, Shenzhen, Guangdong 518000 (CN); WANG, Xiaodong, Shenzhen, Guangdong 518000 (CN); ZHAO, Wei, Shenzhen, Guangdong 518000 (CN)
(74) Representative: Goddar, Heinz J.
(86) International application number: PCT/CN2023/140063
(87) International publication number: WO 2025/129472

(57) **Abstract**

An image processing method includes: obtaining an image captured by an image capture device (S101); and when an image display mode switching condition is met, controlling an image display device to select one of a 2D image display mode and a 3D image display mode for image display (S102). The method can improve an image display effect.

## Description

### TECHNICAL FIELD

The present disclosure generally relates to the field of image processing technologies, and, more particularly, to an image processing method, an image capture device, an image display device, and a movable platform.

### BACKGROUND

Movable platforms are able to transmit captured images to image display devices in real time for display, providing users with a better and more realistic visual experience. Currently, images captured by the movable platforms are typically displayed as 2D images on the image display devices. With the development of 3D image display, displaying images captured by the movable platforms as 3D images on the image display devices to achieve a more realistic visual effect is gaining increasing attention. However, 3D display requires high stability in image transmission. The image transmission can be affected by various factors, which lead to instability and consequently inconsistent 3D display effects, poor display quality, or even inferior 2D display quality, resulting in a poor user experience.

### SUMMARY

Based on this, the present disclosure provides an image processing method, an image capture device, an image display device, and a movable platform, to improve image display effects.

The first aspect of the present provides an image processing method, including:
obtaining an image captured by an image capture device, where the image capture device includes a first capture module and a second capture module, fields of view of the first capture module and the second capture module partially overlap, the first capture module is used to capture a first image, and the second capture module is used to capture a second image; and
when an image display mode switching condition is met, controlling an image display device to select one of a 2D image display mode and a 3D image display mode for image display, where: the image captured by the first capture module is used for display in the 2D image display mode, and the image captured by the first capture module and the image captured by the second capture module are used for display in the 3D image display mode.

In the image processing method provided by the present disclosure, the image captured by the image capture device may be obtained, and, when the image display mode switching condition is met, the image display device is controlled to select one of the 2D image display mode and the 3D image display mode for image display. Adaptively switching between the 2D image display mode and the 3D image display mode may be achieved, such that the image display device is able to display images using the best available image display mode, improving image display quality and user experience.

A second aspect of the present provides an image processing method, including:
obtaining a first image and a second image simultaneously captured by an image capture device of a target object, where the first image is captured by a first capture module of the image capture device, and the second image is captured by a second capture module of the image capture device, and fields of view of the first capture module and the second capture module partially overlap;
splicing the first image and the second image together according to a preset direction to obtain a target image; and
transmitting the target image to the image display device for display in a 3D image display mode.

In the image processing method provided by the second aspect, the first image and the second image of the target object simultaneously captured by the image capture device may be obtained. And then, the first image and the second image may be spliced together in the preset direction to obtain the target image. The target image may be transmitted to the image display device. This may ensure the consistency of image transmission, such that when the image display device uses the target image and the 3D image display method to display the image, it may be ensured that the content displayed in different display areas is at the same time, thereby improving the 3D image display effect and user experience.

A third aspect of the present provides an image capture device, including:
a first capture module and a second capture module, where fields of view of the first capture module and the second capture module partially overlap;
a memory, configured to store a computer program; and
a processor, configured to: execute the computer program, and, when executing the computer program, implement an image processing method provided by the first aspect or the second aspect of the present disclosure.

A fourth aspect of the present provides a movable platform, including:
an image capture device including a first capture module and a second capture module, where fields of view of the first capture module and the second capture module partially overlap;
a memory, configured to store a computer program; and
a processor, configured to: execute the computer program, and, when executing the computer program, implement an image processing method provided by the first aspect or the second aspect of the present disclosure.

A fifth aspect of the present provides an image display device, including:
a first display area and a second display area;
a memory, configured to store a computer program; and
a processor, configured to: execute the computer program, and, when executing the computer program, implement an image processing method provided by the first aspect of the present disclosure.

A sixth aspect of the present provides a storage medium which is able to be read by a computer, configured to store a computer program. When the computer program is executed by a processor, the processor is configured to implement an image processing method provided by the first aspect or the second aspect of the present disclosure.

It should be understood that the above general description and the following specifications are merely exemplary and explanatory, and do not limit the scope of the present disclosure.

### BRIEF DESCRIPTION OF THE DRAWINGS

To more clearly illustrate the technical solutions of the embodiments of the present disclosure, the drawings used in the description of the embodiments will be briefly introduced below. Obviously, the drawings described below are some embodiments of the present disclosure. For those skilled in the art, other drawings can be obtained based on these drawings without creative effort.
FIG. 1 is a schematic diagram showing an application scenario of an image processing method consistent with embodiments of the present disclosure.
FIG. 2 is a flow chart of an image processing method consistent with embodiments of the present disclosure.
FIG. 3 is a flow chart of another image processing method consistent with embodiments of the present disclosure.
FIG. 4 is a flow chart of another image processing method consistent with embodiments of the present disclosure.
FIG. 5 is a flow chart of another image processing method consistent with embodiments of the present disclosure.
FIG. 6 is a flow chart of another image processing method consistent with embodiments of the present disclosure.
FIG. 7 is a schematic structural diagram of an image transmission system of an image processing method consistent with embodiments of the present disclosure.
FIG. 8 is a schematic structural diagram of an image capture device consistent with embodiments of the present disclosure.
FIG. 9 is a schematic structural diagram of a movable platform consistent with embodiments of the present disclosure.
FIG. 10 is a schematic structural diagram of an image display device consistent with embodiments of the present disclosure.

### DETAILED DESCRIPTION OF THE EMBODIMENTS

The technical solutions in the embodiments of the present disclosure will be clearly and completely described below with reference to the accompanying drawings. Obviously, the described embodiments are only a part of embodiments of the present disclosure, but not all embodiments of the present disclosure. Based on the embodiments in the present disclosure, all other embodiments obtained by those skilled in the art without creative effort are within the scope of protection of the present disclosure.

The flowcharts shown in the accompanying drawings are only illustrative examples and do not necessarily include all contents and operations/steps, nor do they necessarily have to be performed in the described order. For example, some operations/steps can be decomposed, combined, or partially merged, so the actual execution order may change according to the actual situation.

Currently, image display devices only support 3D display or 2D display. Compared with 2D display, 3D display has a more realistic visual effect, but 3D display has higher requirements for the stability of image transmission. However, image transmission can be affected by various factors, resulting in unstable image transmission, which in turn leads to unstable 3D display effects, poor display effects or effects even worse than 2D display effects, and poor user experiences. To solve the above problems, the embodiments of the present disclosure provide an image processing method, an image capture device, an image display device, and a movable platform. The image processing method may include: obtaining images captured by an image capture device; and, when an image display mode switching condition is met, controlling the image display device to select an image display mode from a 2D image display mode or a 3D image display mode for image display. Adaptive switching between the 2D image display mode and the 3D image display mode may be achieved, allowing the image display device to display the image using the best available display mode, thus improving image display effects and user experience.

Current 3D display typically uses different channels to transmit different images to the image display device, which can easily lead to inconsistencies in transmission, resulting in poor 3D display effects and a bad user experience. To solve the above problems, the present disclosure provides an image processing method, an image capture device, an image display device, and a movable platform. The image processing method may include: obtaining a first image and a second image of a target object simultaneously captured by the image capture device; splicing the first image and the second image together according to a preset direction to obtain a target image; and then transmitting the target image to the image display device. The consistency of image transmission may be ensured, allowing the image display device to display content in different display areas simultaneously when using the target image and the 3D image display mode, thus improving the 3D image display effect and user experience.

Some embodiments of the present disclosure will be described in detail in conjunction with the accompanying drawings. As long as no conflict exists, the following embodiments and features can be combined with each other.

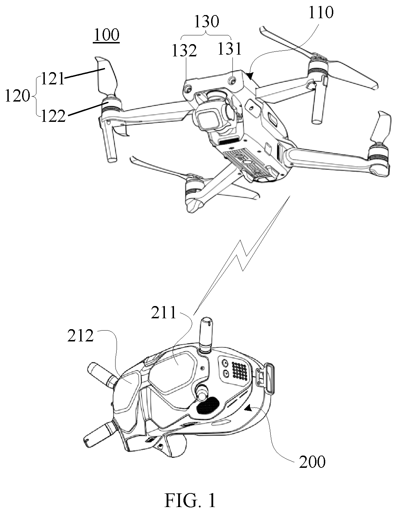

As shown in FIG. 1, which is a schematic diagram showing a scenario implementing the image processing method provided by embodiments of the present disclosure, a movable platform 100 is communicatively connected to an image display device 200. The movable platform 100 includes a platform body 110, a power system 120 provided at the platform body 110, an image capture device 130, and a control system (not shown in FIG. 1). The power system 120 provides mobility to the movable platform 100, and the image capture device 130 is configured to capture images. The movable platform 100 is able to transmit images captured by the image capture device 130 to the image display device 200 for display.

In some embodiments, the power system 120 may include one or more propellers 121, one or more motors 122 corresponding to the one or more propellers, and one or more electronic speed controllers (ESCs). In this embodiment, one motor 122 may be connected between one corresponding electronic speed controller and one corresponding propeller 121, and the motor 122 and the corresponding propeller 121 are provided at the platform body 110 of the movable platform 100. One electronic speed controller may receive drive signals generated by the control system and provide a drive current to one corresponding motor 122 according to the drive signals to control the rotational speed of the corresponding motor 122. One motor 122 may drive one corresponding propeller 121 to rotate, thereby providing power for the movement of the movable platform 100 and enabling the movable platform 100 to achieve one or more degrees of freedom of movement. In some embodiments, the movable platform 100 may be able to rotate about one or more rotation axes. For example, the rotation axes may include a roll axis, a yaw axis, or a pitch axis. It should be understood that the motor 122 may be a DC motor or an AC motor. The motor 122 may be a brushless motor or a brushed motor.

In some embodiments, the control system may include a controller and a sensing system. The sensing system may be used to measure the posture information of the movable platform 100, that is, the position and state information of the movable platform 100 in space, such as a three-dimensional position, a three-dimensional angle, a three-dimensional velocity, a three-dimensional acceleration, or a three-dimensional angular velocity. The sensing system may include at least one of a gyroscope, an ultrasonic sensor, an electronic compass, an inertial measurement unit (IMU), a vision sensor, a global navigation satellite system (GPS), or a barometer. For example, the GPS may be the Global Positioning System. The controller may be used to control the movement of the movable platform 100, for example, by controlling the movement of the movable platform 100 based on the posture information measured by the sensing system. It should be understood that the controller may also control the movable platform 100 according to pre-programmed instructions.

In some embodiments, the image capture device 130 may include a first capture module 131 and a second capture module 132. Fields of view of the first capture module 131 and the second capture module 132 may partially overlap. The first capture module 131 may be used to capture a first image, and the second capture module 132 may be used to capture a second image. The movable platform may transmit the first image and the second image of a target object captured by the image capture device 130 simultaneously to the image display device 200, and the image display device 200 may then display the images in the 3D image display mode. Alternatively, the movable platform may also transmit the first image captured by the first capture module 131 or the second image captured by the second capture module 132 to the image display device 200, and the image display device 200 may then display the images in the 2D image display mode.

In some embodiments, the image capture device 130 or the movable platform 100 may be used to obtain the first image captured by the first capture module 131 and/or the second image captured by the second capture module 132. When the image display mode switching condition is met, the image display device 200 may be controlled to select one display mode from the 2D image display mode or the 3D image display mode for image display. In the 2D image display mode, the first image captured by the first capture module 131 or the second image captured by the second capture module 132 may be used for display. In the 3D image display mode, the first image captured by the first capture module 131 and the second image captured by the second capture module 132 may be used for display. Therefore, adaptive switching of the image display mode of the image display device 200 between the 2D image mode and the 3D image display mode may be achieved in the present embodiment, enabling the image display device 200 to display images using the best available image display mode, thereby improving image display effect and user experience.

In some other embodiments, the image display device 200 may be configured to acquire the first image captured by the first capture module 131 and/or the second image captured by the second capture module 132. When the image display mode switching condition is met, the image display device 200 may be controlled to select one display mode from the 2D image display mode and the 3D image display mode for image display. In the 2D image display mode, the first image captured by the first capture module 131 or the second image captured by the second capture module 132 may be used for display. In the 3D image display mode, the first image captured by the first capture module 131 and the second image captured by the second capture module 132 may be used for display. Therefore, the image display device 200 may be enabled to adaptively switch between the 2D image display mode and the 3D image display mode, allowing the image display device 200 to display images using the best available display mode and improving image display quality and user experience. Furthermore, the need for the image capture device 130 or the movable platform 100 to notify the image display device 200 whether to display in the 2D image display mode or the 3D image display mode may be eliminated. Instead, the image display device 200 may be able to adaptively select the image display mode based on the received images, reducing signaling transmission overhead and improving system robustness.

In some embodiments, the image display device 200 may include a first display area 211 and a second display area 212. The first display area 211 and the second display area 212 may be different display areas on a same display screen, or they may be different display screens. For example, in one embodiment, the first display area 211 may be a first display screen, and the second display area 212 may be a second display screen. The first display screen and/or the second display screen may include an LED display screen, an OLED display screen, an LCD display screen, etc.

In some embodiments, the image capture device 130 or the movable platform 100 may be used to obtain the first image and the second image of the target object simultaneously captured by the image capture device 130. The first image and the second image may be spliced together according to a preset direction to obtain a target image. And the target image may be transmitted to the image display device 200 for display in the 3D image display mode. In this embodiment, the consistency of image transmission may be ensured, such that, when the image display device 200 displays images using the target image in the 3D image display mode, the content displayed in different display areas may be simultaneous, improving the 3D image display effect and user experience.

In some embodiments, the image capture device 130 or the movable platform 100 may be configured to obtain the first image and the second image of the target object simultaneously captured by the image capture device 130. When the image display mode switching condition is met, if the selected image display mode is the 3D image display mode, the first image and the second image may be spliced together according to a preset direction to obtain the target image. The target image may be transmitted to the image display device 200 for the image display device 200 to display the image in the 3D image display mode. When the selected image display mode is the 2D image display mode, the first image or the second image may be transmitted to the image display device 200 for the image display device 200 to display the image in the 2D image display mode.

In some embodiments, the image display device 200 may be configured to obtain images captured by the image capture device 130. When the obtained image includes the first image and the second image, the image may be displayed in the 3D image display mode. When the obtained image is either the first image or the second image, the image may be displayed in the 2D image display mode. This embodiment does not require the image capture device 130 or the movable platform 100 to notify the image display device 200 whether to display in the 2D image display mode or the 3D image display mode. Instead, the image display device 200 may be able to adaptively select whether to display in the 2D image display mode or the 3D image display mode based on the received images, which reduces signaling transmission overhead and improves the robustness of the system.

The movable platform 100 may include aerial vehicles, vehicles, ships, or robots. The aerial vehicles may include manned aerial vehicles or unmanned aerial vehicles. Vehicles may include unmanned vehicles or manned vehicles. Ships may include unmanned ships or manned ships. Robots may include mobile robots, etc. Unmanned aerial vehicles may include rotorcraft, such as single-rotor, dual-rotor, quadcopter, hexacopter, or octacopter unmanned aerial vehicles, and may also be fixed-wing unmanned aerial vehicles, or a combination of rotorcraft and fixed-wing unmanned aerial vehicles, which is not limited in the present disclosure. The image display device 200 may include a head-mounted display device, such as head-mounted glasses.

The image processing method provided by the embodiments of the present disclosure will be described in detail below with reference to the scenario in FIG. 1. It should be noted that the scenario in FIG. 1 is only used as an example to explain the image processing method provided by the embodiments of the present disclosure, but does not constitute a limitation on the application scenario of the image processing method provided by the embodiments of the present disclosure.

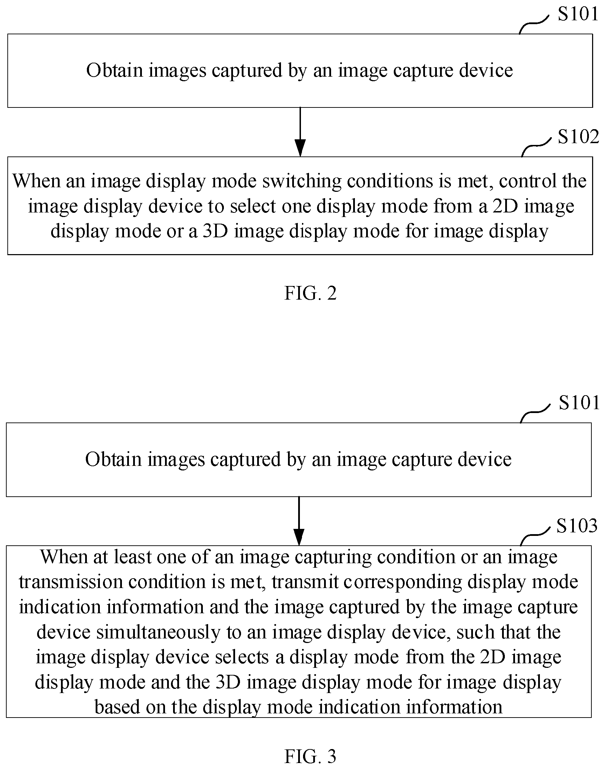

As shown in FIG. 2, which is a flowchart of the image processing method provided by an embodiment of the present disclosure, the image processing method may be applied to a movable platform, an image capture device, or an image display device.

As shown in FIG. 2, the image processing method may include S101 to S102.

At S101, images captured by the image capture device are obtained.

In one embodiment, the image capture device may include a first capture module and a second capture module. The fields of view of the first capture module and the second capture module may partially overlap. The first capture module may be used to capture a first image, and the second capture module may be used to capture a second image. The partial overlap of the fields of view of the first capture module and the second capture module may allow the image capture device to simultaneously capture the target object, obtaining the first image and the second image with parallax.

In some embodiments, obtaining the images captured by the image capture device may include obtaining the first image captured by the first capture module; or may include obtaining the second image captured by the second capture module; or may include obtaining both the first image and the second image captured simultaneously by the image capture device of the target object. The first image may be captured by the first capture module and the second image may be captured by the second capture module.

At S102, when an image display mode switching condition is met, the image display device is controlled to select one display mode from a 2D image display mode or a 3D image display mode for image display.

In one embodiment, in the 2D image display mode, the first image captured by the first capture module may be used for display. In the 3D image display mode, the first image captured by the first capture module and the second image captured by the second capture module may be used for display.

In some embodiments, the image display device may include a first display area and a second display area. In the 2D image display mode, both the first display area and the second display area may display the same image. For example, both the first display area and the second display area may display the first image; or, both the first display area and the second display area may display the second image; or, both the first display area and the second display area may display a fused image obtained by fusing the first and second images. The image display device may include head-mounted glasses, including the first display area for viewing by the user's left eye and the second display area for viewing by the user's right eye.

In some embodiments, in the 3D image display mode, the first display area may display the first image, and the second display area may display the second image. The first and second images may be obtained by the image capture device simultaneously capturing images of the target object. A 3D display effect may be achieved by displaying different images of the target object simultaneously captured by the image capture device in different display areas, providing users with a better visual experience.

In some embodiments, selecting one display mode from the 2D image display mode or the 3D image display mode for image display may include: displaying the first image in both the first display area and the second display area; and, after displaying the first image in the second display area meets a preset display condition, displaying the second image in the second display area. In this embodiment, by first displaying the first image in both the first display area and the second display area during the switch from the 2D image display mode to the 3D image display mode, and then displaying the second image in the second display area after displaying the first image in the second display area meets the preset display condition, the switch from the 2D image display mode to the 3D image display mode may be finished, avoiding abrupt changes in the displayed images and improves the user experience.

In some embodiments, after displaying the first image in the second display area meets the preset display condition, displaying the second image in the second display area may include: displaying the second image in the second display area after the number of frames of the first image displayed in the second display area reaches a preset number of frames. Alternatively, after the time for displaying the first image in the second display area reaches a preset time, the second image may be displayed in the second display area. Alternatively, after the number of frames for displaying the first image in the second display area reaches the preset number of frames and the time for displaying the first image in the second display area reaches the preset time, the second image may be displayed in the second display area. The preset number of frames and the preset time may be set based on actual conditions, which is not specifically limited in the embodiments of the present disclosure.

In some embodiments, the image display mode switching condition may include at least one of: an image capturing condition of the image capture device; an image transmission condition for the image capture device to transmit the captured image to the image display device; or display mode indication information received by the image display device. The display mode indication information may be used to instruct the image display device to select the 2D image display mode or the 3D image display mode. For example, when the image capturing condition, the image transmission condition, and/or the display mode instruction information received by the image display device are met, the image display device may be controlled to select the display mode from the 2D image display mode or the 3D image display mode for image display.

In some embodiments, the image capture device may be installed at the movable platform, and the image capturing condition may include a distance between the movable platform and the target capturing object. For example, when the distance between the movable platform and the target capturing object meets a preset distance condition, the image display device may be controlled to select the display mode from the 2D image display mode or the 3D image display mode for image display. The preset distance condition may include that the distance between the movable platform and the target capturing object is greater than a first distance threshold and/or the distance between the movable platform and the target capturing object is less than the second distance threshold.

In some embodiments, when the distance between the movable platform and the target capturing object meets the preset distance condition, controlling the image display device to select the display mode from the 2D image display mode and the 3D image display mode for image display may include: when the distance between the movable platform and the target capturing object is greater than a first distance threshold, controlling the image display device to select the 2D image display mode for image display; and, when the distance between the movable platform and the target capturing object is less than a second distance threshold, controlling the image display device to select the 3D image display mode for image display. The first distance threshold may be larger than the second distance threshold, and the first distance threshold and the second distance threshold may be set based on actual conditions, which are not specifically limited in the embodiments of the present disclosure. When the movable platform is far away from the target capturing object, the parallax between the first image and the second image captured by the image capture device may be small, and the 3D display effect may not be obvious. Therefore, when the movable platform is far away from the target capturing object, the 2D image display method may be selected for image display to avoid transmitting 3D images, which occupy a large amount of bandwidth. Instead, more bandwidth may be used to transmit 2D images to improve the quality of the 2D image. When the movable platform is closer to the target capturing object, the parallax between the first image and the second image captured by the image capture device may be larger, and the 3D display effect may be better. Therefore, when the movable platform is closer to the target capturing object, choosing the 3D image display mode for image display may provide a better and more realistic visual experience to the user, and improve the user experience.

In some embodiments, the movable platform may be an aerial vehicle, and the image capture condition may include a flight altitude of the aerial vehicle. For example, when the flight altitude of the aerial vehicle meets a preset altitude condition, the image display device may be controlled to select the display mode from the 2D image display mode or the 3D image display mode for image display. The preset altitude condition may include that the flight altitude of the aerial vehicle is greater than the first altitude threshold and/or the flight altitude of the aerial vehicle is less than the second altitude threshold.

In some embodiments, when the distance between the aerial vehicle and the target capturing object is greater than the first distance threshold and the flight altitude of the aerial vehicle is greater than the first altitude threshold, the image display device may be controlled to select the 2D image display mode for image display. When the distance between the aerial vehicle and the target capturing object is less than the second distance threshold and the flight altitude of the aerial vehicle is less than the second altitude threshold, the image display device may be controlled to select the 3D image display mode for image display. The first altitude threshold may be greater than the second altitude threshold, and the first altitude threshold and the second altitude threshold may be set based on actual conditions, which are not specifically limited in the embodiments of the present disclosure. When the aerial vehicle is far away from the target capturing object and the flight altitude of the aerial vehicle is high, the parallax between the first image and the second image captured by the image capture device may be small, and the 3D display effect may not be obvious. Therefore, when the aerial vehicle is far away from the target capturing object and the flight altitude of the aerial vehicle is high, the 2D image display mode may be selected for image display to avoid transmitting 3D images which occupy a large amount of bandwidth. Instead, more bandwidth may be used to transmit 2D images to improve the quality of the 2D images. When the aerial vehicle is closer to the target capturing object and the flight altitude of the aerial vehicle is lower, the parallax between the first image and the second image captured by the image capture device may be larger, and the 3D display effect may be better. Therefore, when the aerial vehicle is closer to the target capturing object and the flight altitude of the aerial vehicle is lower, selecting the 3D image display mode for image display may provide a better and more realistic visual experience to the user, and improve the user experience.

In some embodiments, the image capture device and the image display device may communicate through wireless communication, and the image transmission condition may include at least one of: a signal transmission quality between the image capture device and the image display device; a communication distance between the image capture device and the image display device; or bandwidth used to transmit the first image and the second image. The communication distance between the image capture device and the image display device may be determined by a positioning system, which may include a Global Positioning System (GPS), a Beidou positioning system, a Galileo positioning system, a RTK positioning system, etc. The communication distance between the image capture device and the image display device may also be determined by the data round-trip time or light speed of the wireless channel between the image capture device and the image display device, which is not specifically limited in the embodiments of the present disclosure.

In some embodiments, when at least one of the following conditions may be met, the image display device may be controlled to select a display mode from the 2D image display mode and the 3D image display mode for image display: the signal transmission quality between the image capture device and the image display device meets a preset quality condition; the communication distance between the image capture device and the image display device meets a preset communication distance condition; or the bandwidth used to transmit the first image and the bandwidth used to transmit the second image meet a preset bandwidth condition.

In some embodiments, the preset quality condition may include that the signal transmission quality between the image capture device and the image display device is less than a first quality threshold and/or the signal transmission quality between the image capture device and the image display device is greater than a second quality threshold. The preset communication distance condition may include that the communication distance between the image capture device and the image display device is greater than the first communication distance threshold and/or the communication distance between the image capture device and the image display device is less than the second communication distance threshold. The preset bandwidth condition may include that the difference between the bandwidth used to transmit the first image and the bandwidth used to transmit the second image is greater than the first bandwidth difference threshold and/or the difference between the bandwidth used to transmit the first image and the bandwidth used to transmit the second image is less than the second bandwidth difference threshold.

In some embodiments, when the signal transmission quality between the image capture device and the image display device is less than the first quality threshold, the image display device may be controlled to select the 2D image display mode for image display; and/or, when the signal transmission quality between the image capture device and the image display device may be greater than the second quality threshold, the image display device may be controlled to select the 3D image display mode for image display. The first quality threshold may be smaller than the second quality threshold. The first quality threshold and the second quality threshold may be set based on actual conditions, which is not specifically limited in the embodiments of the present disclosure. When the signal transmission quality between the image capture device and the image display device is poor, the wireless channel between the image capture device and the image display device cannot effectively support the transmission of images required by the 3D image display mode. The display effect of the 3D image display mode may be poor, even inferior to the display effect of the 2D image display mode. Therefore, when the signal transmission quality is poor, selecting the 2D image display mode for image display may ensure the display effect of the image. When the signal transmission quality between the image capture device and the image display device is good, the wireless channel between the image capture device and the image display device may be able to effectively support the transmission of images required by the 3D image display mode. The 3D image display mode may have a better display effect. Therefore, when the signal transmission quality is good, choosing the 3D image display mode for image display may provide a better and more realistic visual experience to the user, and improve the user experience.

In some embodiments, when the communication distance between the image capture device and the image display device is greater than the first communication distance threshold, the image display device may be controlled to select the 2D image display mode for image display; and/or, when the communication distance between the image capture device and the image display device is less than the second communication distance threshold, the image display device may be controlled to select the 3D image display mode for image display. The first communication distance threshold may be greater than the second communication distance threshold. The first communication distance threshold and the second communication distance threshold may be set based on actual conditions, which is not specifically limited in the embodiments of the present disclosure. It may be understood that, when other factors remain unchanged, the longer the communication distance, the worse the signal transmission quality, and the shorter the communication distance, the better the signal transmission quality. Therefore, in this embodiment, when the image capture device is far from the image display device, the 2D image display mode may be selected for image display to avoid transmitting 3D images that would occupy a large bandwidth and could cause interruptions in image transmission. At the same time, it may ensure the display effect of the images. When the image capture device is close to the image display device, choosing the 3D image display mode for image display may provide users a better and more realistic visual experience and improve the user experience.

In some embodiments, when the difference between the bandwidth used to transmit the first image and the bandwidth used to transmit the second image is greater than the first bandwidth difference threshold, the image display device may be controlled to select the 2D image display mode for image display; and/or, when the difference between the bandwidth used to transmit the first image and the bandwidth used to transmit the second image is less than the second bandwidth difference threshold, the image display device may be controlled to select the 3D image display mode for image display. The first bandwidth difference threshold and the second bandwidth difference threshold may be set based on actual conditions, which is not specifically limited in the embodiments of the present disclosure. In this embodiment, there may be no need for the image capture device or the movable platform to notify the image display device whether to display in a 2D image display mode or a 3D image display mode. Instead, the image display device may adaptively select whether to select the 2D image display mode for image display or the 3D image display mode for image display based on the difference between the bandwidth used to transmit the first image and the bandwidth used to transmit the second image, reducing the signaling transmission overhead and improving the robustness of the system.

In some embodiments, when the bandwidth of the wireless channel between the image capture device and the image display device decreases and the current bandwidth of the wireless channel is less than the first bandwidth threshold, the image display device may be controlled to select the 2D image display mode for image display; and/or when the bandwidth of the wireless channel between the image capture device and the image display device increases and the current bandwidth of the wireless channel is greater than the second bandwidth threshold, the image display device may be controlled to select the 3D image display mode for image display. The first bandwidth threshold and the second bandwidth threshold may be set based on actual conditions, which is not specifically limited in the embodiments of the present disclosure. In this embodiment, when the bandwidth of the wireless channel between the image capture device and the image display device is reduced, and the current bandwidth of the wireless channel is small, it may be determined that the transmission quality of the wireless channel between the image capture device and the image display device is poor. At this time, the 2D image display mode may be selected for image display, which can avoid transmitting the images required for the 3D image display mode which occupy a large bandwidth and cause no interruption in image transmission. Also, the display effect of the image can be ensured. When the bandwidth of the wireless channel between the image capture device and the image display device increases, and when the current bandwidth of the wireless channel is large, it may be determined that the transmission quality of the wireless channel between the image capture device and the image display device is better. At this time, choosing the 3D image display mode for image display may provide a better and more realistic visual experience to the user, and improve the user experience.

In some embodiments, as shown in FIG. 3, after S101, the image processing method further includes:
S103: when at least one of the image capturing condition or the image transmission condition is met, the corresponding display mode indication information and the image captured by the image capture device are simultaneously transmitted to the image display device, such that the image display device selects the display mode from the 2D image display mode or the 3D image display mode for image display based on the display mode indication information.

In this embodiment, the display mode indication information may include 2D display mode indication information or 3D display mode indication information. The 2D display mode indication information may be used to instruct the image capture device to select the 2D image display mode for image display, and the 3D display mode indication information may be used to instruct the image capture device to select a 3D image display mode for image display. In this embodiment, when the image capturing condition and/or the image transmission condition are met, the corresponding display mode indication information and the image captured by the image capture device may be simultaneously transmitted to the image display device, such that the image display device may select the display mode from the 2D image display mode and the 3D image display mode for image display according to the display mode indication information, thereby realizing adaptive switching between the 2D image display mode and the 3D image display mode. Correspondingly, the image display device may display images in the best current image display mode, improving the image display effect and user experience.

In some embodiments, when the image capture device simultaneously receives the image captured by the image capture device and the display mode indication information, it may select a display mode from the 2D image display mode and the 3D image display mode for image display based on the display mode indication information. For example, when the display mode instruction information is the 2D display mode instruction information, the image capture device may select the 2D image display mode for image display. When the display mode instruction information is the 3D display mode instruction information, the image capture device may select the 3D image display mode for image display. The 2D display mode instruction information may be used to instruct the image capture device to select the 2D image display mode for image display, and the 3D display mode instruction information may be used to instruct the image capture device to select the 3D image display mode for image display.

In some embodiments, the display mode indication information may be an instruction sent separately to the image display device by the image capture device or the movable platform, or may be encoded together with the image data during image transmission and transmitted simultaneously.

In some embodiments, satisfying at least one of the image capturing condition and the image transmission condition may include at least one of: the distance between the movable platform and the target capturing object satisfies the preset distance condition; the distance between the aerial vehicle and the target capturing object satisfies the preset distance condition and the flight altitude of the aerial vehicle satisfies the preset altitude condition; the signal transmission quality between the image capture device and the image display device meets the preset quality condition; the communication distance between the image capture device and the image display device meets the preset communication distance condition; or the bandwidth used to transmit the first image and the bandwidth used to transmit the second image meet the preset bandwidth condition.

In some embodiments, when at least one of the following conditions is met, the 2D display mode indication information and the image captured by the image capture device may be simultaneously transmitted to the image display device, such that the image display device selects the 2D image display mode for image display according to the 2D display mode indication information: the distance between the movable platform and the target capturing object is greater than the first distance threshold; the distance between the aerial vehicle and the target capturing object is greater than the first distance threshold, and the flying altitude of the aerial vehicle is greater than the first altitude threshold; the signal transmission quality between the image capture device and the image display device is less than the first quality threshold; the communication distance between the image capture device and the image display device is greater than the first communication distance threshold; or the difference between the bandwidth used to transmit the first image and the bandwidth used to transmit the second image is greater than the first bandwidth difference threshold.

In some embodiments, when at least one of the following conditions is met, the 3D display mode indication information and the image captured by the image capture device may be simultaneously transmitted to the image display device, so that the image display device selects the 3D image display mode for image display according to the 3D display mode indication information: the distance between the movable platform and the target capturing object is less than the second distance threshold; the aerial vehicle and the target capturing object The distance between them is less than the second distance threshold, and the flight altitude of the aerial vehicle is less than the second altitude threshold; the signal transmission quality between the image capture device and the image display device is greater than the second quality threshold; the communication distance between the image capture device and the image display device is less than the second communication distance threshold; or the difference between the bandwidth used to transmit the first image and the bandwidth used to transmit the second image is less than the second bandwidth difference threshold.

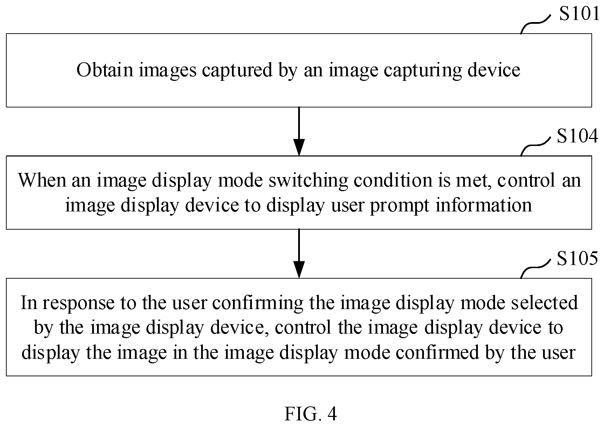

In some embodiments, as shown in FIG. 4, after S101, the image processing method further includes S104 and S105.

At S104: when the image display mode switching condition is met, the image display device is controlled to display user prompt information.

In this embodiment, the user prompt information may be used to remind the user of the image display mode selected by the image display device. For example, the user prompt information may include first prompt information or second prompt information. The first prompt information may be used to remind the user that the image display mode selected by the image display device is the 2D image display mode. The second prompt information may be used to remind the user that the image display mode selected by the image display device is the 3D image display mode.

At S105, in response to the user confirming the image display mode selected by the image display device, the image display device is controlled to display the image in the image display mode confirmed by the user.

In this embodiment, the image display device may be controlled to display the user prompt information when the image display mode switching condition is met to remind the user of the image display mode selected by the image display device. The confirmation of the image display mode of the image display device may be decided by the user himself. The selection of the image display mode may be more flexible and may bring a better experience to the user.

For example, the image display device may display the first prompt information to remind the user that the selected image display mode of the image display device is the 2D image display mode. When the user confirms the selected 2D image display mode at this time, the image display device may display the image in the 2D image display mode. When the user rejects the selected 2D image display mode at this time, the image display device may still display the image in the current 3D image display mode. For another example, the image display device may display the second prompt information to remind that the selected image display mode of the image display device is the 3D image display mode. When the user confirms the selected 3D image display mode at this time, the image display device may display the image in the 3D image display mode. When the user rejects the selected 3D image display mode at this time, the image display device may still display the image in the current 2D image display mode.

It should be understood that the image processing method provided in this embodiment may be applied to the movable platform or the image capture device. For example, when the image display mode switching condition is met, the movable platform or the image capture device sends user prompt information to the image display device, so that the image display device may display the user prompt information, and in response to the user's confirmation operation on the image display mode selected by the image display device, the image may be displayed in the image display mode confirmed by the user.

Of course, in some other embodiments, the image processing method may also be applied to the image display device. For example, when the image display mode switching condition is met, the image display device may display the user prompt information, and in response to the user's confirmation operation on the image display mode selected by the image display device, display the image in the image display mode confirmed by the user. The confirmation operation may include the user's click operation on a confirmation button on the image display device or touch operation on a confirmation button displayed on the image display device.

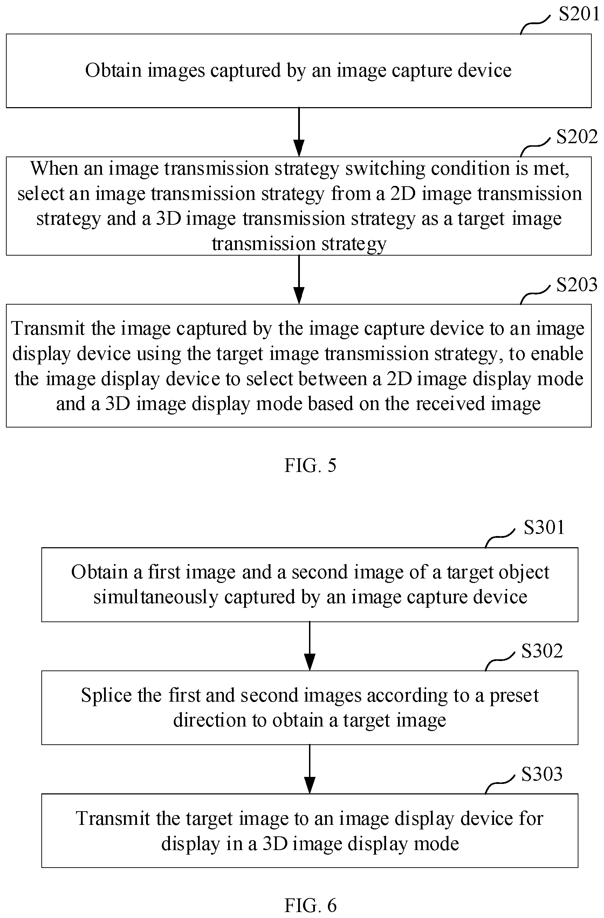

Refer to FIG. 5, which is a flowchart of another image processing method provided by an embodiment of the present disclosure, the image processing method may be applied to a movable platform or an image capture device. As shown in FIG. 5, the image processing method includes S201 to S203.

At S201, the image captured by the image capture device is obtained.

For example, obtaining the image captured by the image capture device may include: obtaining the first image captured by the first capture module; or obtaining the second image captured by the second capture module; or obtaining the first image and the second image of the target object captured simultaneously by the image capture device. The first image may be captured by the first capture module, and the second image may be captured by the second capture module.

At S202, when an image transmission strategy switching condition is met, an image transmission strategy from the 2D image transmission strategy and the 3D image transmission strategy is selected as a target image transmission strategy.

In some embodiments, in the 2D image transmission strategy, only the first image may be transmitted, or only the second image may be transmitted.

In some embodiments, in the 2D image transmission strategy, the first image and the second image may be transmitted, and the difference between the bandwidth used to transmit the first image and the bandwidth used to transmit the second image may be larger than the first bandwidth difference threshold. In the 3D image transmission strategy, the difference between the bandwidth used to transmit the first image and the bandwidth used to transmit the second image may be less than the second bandwidth difference threshold. The first bandwidth difference threshold may be greater than the second bandwidth difference threshold. The first bandwidth difference threshold and the second bandwidth difference threshold may be set based on actual conditions, which is not specifically limited in the embodiments of the present disclosure.

In some embodiments, the image transmission strategy switching condition may include an image capturing condition of the image capture device and/or an image transmission quality condition. The image capturing condition may include a preset distance condition for the distance between the movable platform equipped with the image capture device and the target capturing object. Or the image capturing condition may include a preset distance condition for the distance between the aerial vehicle equipped with the image capture device and the target capturing object and a preset altitude condition for the flight altitude of the aerial vehicle. The image transmission quality condition may include at least one of: a preset quality condition for signal transmission quality between the image capture device and the image display device; or a preset communication distance condition for the communication distance between the image capture device and the image display device.

In some embodiments, when the distance between the movable platform and the target capturing object is greater than the first distance threshold, the 2D image transmission strategy may be selected from the 2D image transmission strategy and the 3D image transmission strategy as the target image transmission strategy. When the distance between the movable platform and the target capturing object is less than the second distance threshold, the 3D image transmission strategy may be selected from the 2D image transmission strategy and the 3D image transmission strategy as the target image transmission strategy. When the movable platform is far away from the target capturing object, the parallax between the first image and the second image captured by the image capture device may be small, and the 3D display effect may not be obvious. Therefore, the 2D image transmission strategy may be selected to avoid using the 3D image transmission strategy, which takes up a lot of bandwidth. Instead, more bandwidth may be used to transmit 2D images to improve the 2D image quality. When the movable platform is closer to the target capturing object, the parallax between the first image and the second image captured by the image capture device may be larger, and the 3D display effect may be better. Therefore, when the movable platform is closer to the target capturing object, the 3D image transmission strategy may be selected, such that the image display device may display the 3D image of the image transmitted by the 3D image transmission strategy, which may bring a better and more realistic visual experience to the user and improve the user experience.

In some embodiments, when the distance between the aerial vehicle and the target capturing object is greater than the first distance threshold, and the flight altitude of the aerial vehicle is greater than the first height threshold, the 2D image transmission strategy may be selected from the 2D image transmission strategy and the 3D image transmission strategy as the target image transmission strategy. When the distance between the aerial vehicle and the target capturing object is less than the second distance threshold, and the flight altitude of the aerial vehicle is less than the second height threshold, the 3D image transmission strategy may be selected from the 2D image transmission strategy and the 3D image transmission strategy as the target image transmission strategy. When the aerial vehicle is far away from the target capturing object and the flight altitude of the aerial vehicle is high, the parallax between the first image and the second image captured by the image capture device may be small, and the 3D display effect may not be obvious. Therefore, the 2D image transmission strategy may be selected to avoid using the 3D image transmission strategy that takes up a lot of bandwidth. Instead, more bandwidth may be used to transmit 2D images to improve the 2D image quality. When the aerial vehicle is closer to the target capturing object and the flight height of the aerial vehicle is low, the parallax between the first image and the second image captured by the image capture device may be larger, and the 3D display effect may be better. Therefore, the 3D image transmission strategy may be selected, such that the image display device may display the 3D image of the image transmitted by the 3D image transmission strategy, which may bring a better and more realistic visual experience to the user and improve the user experience.

In some embodiments, when the signal transmission quality between the image capture device and the image display device is less than the first quality threshold, the 2D image transmission strategy may be selected from the 2D image transmission strategy and the 3D image transmission strategy as the target image transmission strategy; and/or, when the signal transmission quality between the image capture device and the image display device is greater than the second quality threshold, the 3D image transmission strategy may be selected from the 2D image transmission strategy and the 3D image transmission strategy as the target image transmission strategy. When the signal transmission quality between the image capture device and the image display device is poor, the wireless channel between the image capture device and the image display device cannot effectively support the 3D image transmission strategy. The transmission effect of the 3D image transmission strategy may not be good, which affects the display effect of the 3D image display mode which may be even inferior to the display effect of the 2D image display method. Therefore, when the signal transmission quality is poor, the 2D image transmission strategy may be selected to ensure the stability of the image transmission, thereby ensuring the display effect of the 2D image display mode. When the signal transmission quality between the image capture device and the image display device is good, the wireless channel between the image capture device and the image display device may effectively support the 3D image transmission strategy, and the 3D image display mode may have a better display effect. Therefore, when the signal transmission quality is good, the 3D image transmission strategy may be selected such that the image display device may display images in the 3D image display mode, which may bring a better and more realistic visual experience to the user and improve the user experience.

In some embodiments, when the communication distance between the image capture device and the image display device is greater than a first communication distance threshold, the 2D image transmission strategy may be selected as the target image transmission strategy from the 2D image transmission strategy and the 3D image transmission strategy; and/or, when the communication distance between the image capture device and the image display device is less than a second communication distance threshold, the 3D image transmission strategy may be selected as the target image transmission strategy from the 2D image transmission strategy and the 3D image transmission strategy. It may be understood that, all other factors remaining constant, the longer the communication distance, the worse the signal transmission quality; conversely, the shorter the communication distance, the worse the signal transmission quality. Therefore, in this embodiment, by selecting the 2D image transmission strategy when the image capture device is far from the image display device, the large bandwidth required by the 3D image transmission strategy may be avoided, preventing image transmission interruption while ensuring image display quality. When the image capture device is close to the image display device, selecting the 3D image transmission strategy may enable the image display device to display images in 3D, providing users with a better and more realistic visual experience and improving user experience.

At S203, the image captured by the image capture device is transmitted to the image display device using the target image transmission strategy, to enable the image display device to select between the 2D image display mode and the 3D image display mode for image display based on the received image.

In this embodiment, by adaptively selecting between the 2D and 3D image transmission strategies when switching image transmission strategies, the image captured by the image capture device may be transmitted to the image display device, which allows the image display device to determine which image transmission strategy the movable platform or image capture device may be using based on the received image, and then adaptively adopt the best image display mode, greatly improving image display quality and user experience.

In some embodiments, selecting the display mode from the 2D image display mode and the 3D image display mode for image display based on the received image may include: determining the difference between the bandwidth used to transmit the first image and the bandwidth used to transmit the second image; when the difference between the bandwidth used to transmit the first image and the bandwidth used to transmit the second image is greater than a first bandwidth difference threshold, the image display device selecting the 2D image display mode for image display; and/or, when the difference between the bandwidth used to transmit the first image and the bandwidth used to transmit the second image is less than a second bandwidth difference threshold, the image display device selecting the 3D image display mode for image display.

In some embodiments, transmitting the image captured by the image capture device to the image display device using the target image transmission strategy may include: when the target image transmission strategy is the 2D image transmission strategy, transmitting the first image to the image display device, or transmitting the first image to the image display device using a first bandwidth and simultaneously transmitting the second image to the image display device using a second bandwidth, where the difference between the first bandwidth and the second bandwidth is greater than the first bandwidth difference threshold. In this embodiment, during the switch from the 3D image transmission strategy to the 2D image transmission strategy, the movable platform or the image capture device may be able to use more channel bandwidth to transmit the first image to the image display device, preventing image transmission interruption during the switch, ensuring image transmission stability and improving image display quality.

In some embodiments, transmitting the image captured by the image capture device to the image display device using the target image transmission strategy may include: when the target image transmission strategy is the 3D image transmission strategy, splicing the first image and the second image to obtain a target image, and then transmitting the target image to the image display device. The first image and the second image may be obtained by the image capture device simultaneously capturing images of the target object. In this embodiment, by splicing the first image and the second image obtained by the image capture device simultaneously capturing images of the target object before transmitting them to the image capture device, consistency in image transmission may be ensured, which allows the image display device to display content in different display areas simultaneously when using the target image and 3D image display mode, improving the 3D image display effect and user experience.

In some embodiments, transmitting the target image to the image display device may include: within a preset time period after switching from the 2D image transmission strategy to the 3D image transmission strategy, obtaining the number of I macroblocks corresponding to the second image that has been transmitted to the image display device; when the number of transmitted I macroblocks is less than the total number of macroblocks in the second image, encoding the first image included in the target image using a preset encoding algorithm and the first bandwidth, simultaneously encoding the second image contained in the target image using an intra-frame encoding algorithm and the second bandwidth, and transmitting the encoded target image to the image display device. The encoded target image may include n P macroblocks and m I macroblocks corresponding to the second image, where n and m may be both integers greater than 1. The sum of the first bandwidth and the second bandwidth may be equal to the current bandwidth of the channel, and the difference between the first bandwidth and the second bandwidth may be less than the second bandwidth difference threshold. When the number of transmitted I macroblocks is greater than or equal to the total number of macroblocks in the second image, the first image included in the target image may be encoded using a preset encoding algorithm and the first bandwidth, and simultaneously the second image may be encoded using a preset encoding algorithm and the second bandwidth, and then the encoded target image may be transmitted to the image display device. The preset coding algorithm and intra-frame coding algorithm may be set based on actual conditions, and the present disclosure does not impose specific limitations on them. For example, the preset coding algorithm may include the inter-frame coding algorithm, and the intra-frame coding algorithm may include a Gradual Decoder Refresh (GDR) coding algorithm.

In some embodiments, the image display device selecting the display mode from the 2D image display mode and the 3D image display mode for image display based on the received image may include: when the received image is the encoded target image, if the encoded target image includes m I macroblocks corresponding to the second image and the number of received I macroblocks is less than the total number of macroblocks included in the second image, decoding the first image in the encoded target image to obtain the first image, and displaying the first image in both the first display area and the second display area (displayed in the 2D image display mode); if the encoded target image includes m I macroblocks corresponding to the second image, and the number of received I macroblocks reaches the total number of macroblocks in the second image, decoding the first image in the encoded target image to obtain the first image, decoding all I macroblocks corresponding to the received second image to obtain the second image, displaying the first image in the first display area, and displaying the second image in the second display area (displayed in the 3D image display mode); if the encoded target image does not include m I macroblocks corresponding to the second image, decoding the encoded target image to obtain the first image and the second image, displaying the first image in the first display area, and displaying the second image in the second display area (displayed in the 3D image display mode).

In this embodiment, during the switching from the 2D image transmission strategy to the 3D image transmission strategy, the movable platform or the image capture device may use a first bandwidth and a second bandwidth with minimal difference to transmit the first and second images, respectively. The second image may be first refreshed using the intra-frame coding algorithm before switching to normal image transmission, which allows the image display device to continue displaying the image in the 2D image display mode for a period before switching to the 3D image display mode, preventing image transmission interruptions and abrupt image changes, thus improving the image display effect. Furthermore, the image capture device or the movable platform may not need to notify the image display device whether to display in the 2D image display mode or the 3D image display mode; instead, the image display device may adaptively select between the 2D image display mode and the 3D image display mode based on the received image, reducing signaling transmission overhead and improving system robustness.

Refer to FIG. 6, where FIG. 6 is a schematic flowchart of another image processing method provided by some embodiments of the present disclosure. This image processing method may be applied to the movable platform or the image capture device.

As shown in FIG. 6, the image processing method includes S301 to S303.

At S301, a first image and a second image of the target object simultaneously captured by the image capture device are obtained.

In this embodiment, the first image may be captured by a first capture module of the image capture device, and the second image may be captured by a second capture module of the same image capture device. The fields of view of the first and second capture modules may partially overlap. This partial overlap may allow the image capture device to simultaneously capture the target object, obtaining the first image and the second image with parallax. Thus, when the first and second images are simultaneously displayed in different display areas, a stereoscopic display effect may be achieved.

In some embodiments, the hardware parameters of the first capture module may be the same as those of the second capture module. These hardware parameters may include at least one of clock frequency, focus, exposure, white balance, or tone parameters. The hardware parameters of the first capture module may be the same as those of the second capture module, which ensures that the image parameters (including at least one of brightness, color, sharpness, or depth of field) of the first image captured by the first capture module are consistent with the image parameters of the second image captured by the second capture module. This may allow for good image merging when using the first and second images for 3D image display, providing users with a better 3D visual experience.

In some embodiments, the first capture module may include a first image sensor, and the second capture module includes a second image sensor. The first and second image sensors may have the same hardware parameters. The same hardware parameters of the first and second image sensors may ensure consistency between the image parameters (including at least one of brightness, color, sharpness, or depth of field) of the first image captured by the first image sensor and the image parameters of the second image captured by the second image sensor. This may allow for good image merging when using the first and second images for 3D image display, providing users with a better 3D visual experience.

In some embodiments, the first and second image sensors may share the same image signal processor (ISP). Through the shared image processor, the first and second image sensors may be accurately controlled to simultaneously capture images with the same hardware parameters, which effectively ensures the consistency between the image parameters of the first image acquired by the first image sensor and the image parameters of the second image acquired by the second image sensor. Therefore, when using the first and second images for 3D image display, they may be well combined, providing users with a better 3D visual effect.

At S302, the first image and the second image are spliced according to a preset direction to obtain the target image.

In this embodiment, the preset direction may be set based on actual conditions, and the present disclosure does not specifically limit it. For example, the preset direction may include the left-right direction, that is, the first and second images may be spliced according to the left-right direction to obtain the target image. The left-right direction may be more in line with the human eye, allowing the image display device to split the target image according to the left-right direction when receiving it, without additional processing, and quickly obtain the first image to be displayed in the left-eye corresponding display area and the second image to be displayed in the right-eye corresponding display area. It is understood that the preset direction may also include the up-down direction.

In some embodiments, in the target image, the image quality parameters of the symmetrical image regions on two sides may be the same. The image quality parameters may include bitrate or quantization parameters. The target image may be obtained by splicing the first image and the second image together in the left-right direction. Therefore, the image quality parameters of the symmetrical image regions in the target image may be the same, ensuring that the image quality parameters of the first and second images in the target image are identical. This may ensure that when the image display device uses the target image to display the image in the 3D image display mode, the blurring effect of the first and second images may be consistent, providing users with a better 3D visual effect.

In some embodiments, splicing the first and second images together in the left-right direction may further include inserting a connection image between the first and second images. The first image may be spliced to the second image through the connection image, avoiding discontinuities in the image region near the splicing position in the target image during subsequent processing by inserting the connection image between the first and second images.

In some embodiments, the connection image may include any of a preset blank image, an image including multiple columns of pixels from the right edge of the first image, an image including multiple columns of pixels from the left edge of the second image, or an image including multiple columns of pixels from the right edge of the first image and multiple columns of pixels from the left edge of the second image.

At S303, the target image is transmitted to the image display device for display in the 3D image display mode.

In this embodiment, the first image and the second image simultaneously captured by the image capture device of the target object may be obtained and then spliced together in the preset direction to obtain the target image, and then the target image may be transmitted to the image display device, eliminating the need for different channels to transmit different images, ensuring image transmission consistency. When the image display device uses the target image and the 3D image display mode, the content displayed in different display areas may be simultaneous, improving the 3D image display effect and user experience.

In some embodiments, the image display device may include a first display area and a second display area, arranged in a preset direction. Displaying the image in a 3D image display mode may include: after receiving the target image, the image display device splitting the target image to obtain the first image and the second image, and displaying the first image in the first display area and the second image in the second display area. The target image may include the connection image. When the image display device splits the target image, the first image, the second image, and the connection image may be obtained, at which point the connection image may be deleted.

In some embodiments, the image display device may include head-mounted glasses, with a first display area for viewing by the user's left eye and a second display area for viewing by the user's right eye. For example, after receiving the target image, the head-mounted glasses may split the target image to obtain the first image and the second image, display the first image in the first display area for viewing by the user's left eye, and simultaneously display the second image in the second display area for viewing by the user's right eye, thereby presenting a 3D display effect to the user and improving the user's visual experience.

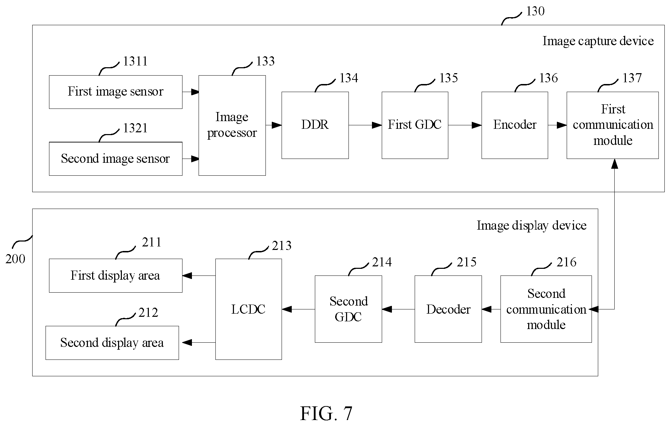

For example, as shown in FIG. 7, in some embodiments, the image transmission system includes an image capture device 130 and an image display device 200. The image capture device 130 includes a first image sensor 1311, a second image sensor 1321, an image processor 133, a DDR (Double Data Rate) 134, a first GDC (Graphics Display Controller) 135, an encoder 136, and a first communication module 137. Both the first image sensor 1311 and the second image sensor 1321 are connected to the image processor 133. The image display device 200 includes a first display area 211, a second display area 212, an LCDC (Liquid Crystal Display Controller) 213, a second GDC 214, a decoder 215, and a second communication module 216.

The image processor 133 controls the first image sensor 1311 and the second image sensor 1321 to simultaneously capture images of the target object according to the same hardware parameters, obtaining a first image and a second image, and then transmits the first image and the second image to the DDR 134 for storage. The image processor 133 is also used to splice the first image and the second image in a left-right direction, and transmit the spliced image to the first GDC 135. The first GDC 135 is used to insert a connection image into the stitched image to obtain the target image, and transmit the target image to the encoder 136. The encoder 136 is used to encode the target image, and transmit the encoded target image to the first communication module 137. The first communication module 137 is used to transmit the encoded target image to the second communication module 216. The second communication module 216 is used to transmit the encoded target image to the decoder 215. The decoder 215 is used to decode the encoded target image to obtain the target image, and transmit the target image to the second GDC 214. The second GDC 214 is used to delete the connection image from the target image to obtain the image to be displayed, and transmit the image to be displayed to the LCDC. 213. The LCDC 213 is used to split the image to be displayed into the first image and the second image, and transmit the first image to the first display area 211 for display, while simultaneously transmit the second image to the second display area 212 for display, thereby realizing 3D image display.

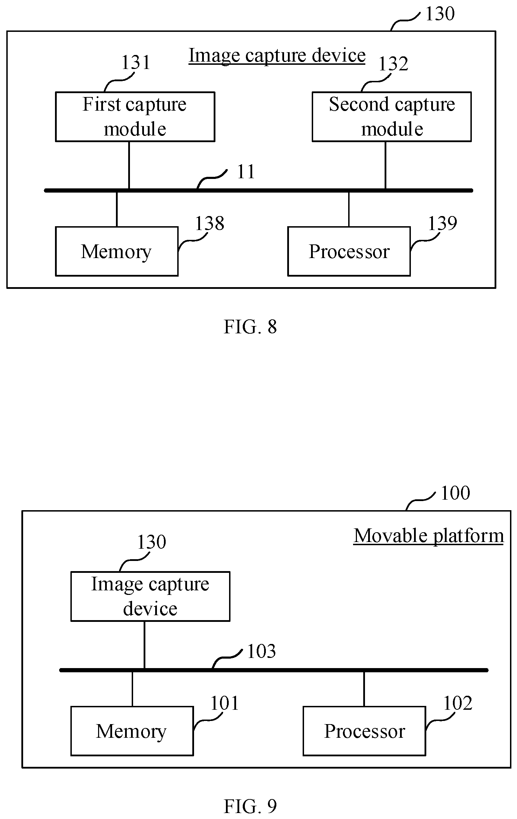

Refer to FIG. 8, where FIG. 8 is a schematic block diagram of an image capture device provided by embodiments of the present disclosure.

As shown in FIG. 8, in some embodiments, the image capture device 130 includes a first capture module 131, a second capture module 132, a memory 138, and a processor 139. The first capture module 131, the second capture module 132, the memory 138, and the processor 139 are connected via a bus 11. The field of view of the first capture module 131 and the second capture module 132 partially overlap. The bus 11 is, for example, an I2C (Inter-integrated Circuit) bus.

The processor 139 may be a microcontroller unit (MCU), a central processing unit (CPU), or a digital signal processor (DSP), etc.

The memory 138 may be a Flash chip, a read-only memory (ROM), an optical disk, a USB flash drive, or a portable hard drive, etc.

The processor 139 may be used to run a computer program stored in the memory 138, and when executing the computer program, configured to perform:
obtaining an image captured by the image capture device, where: the image capture device includes a first capture module and a second capture module, the field of view of the first capture module and the second capture module partially overlap, the first capture module is used to capture a first image, and the second capture module is used to capture a second image; and
when the image display mode switching condition is met, controlling the image display device to select one display mode from the 2D image display mode and the 3D image display mode for image display, where: in the 2D image display mode, the image captured by the first capture module is used for display, and in the 3D image display mode, the image captured by the first capture module and the image captured by the second capture module are used for display.

In some embodiments, the image display device may include a first display area and a second display area.

In a 2D image display mode, both the first display area and the second display area may display the same image.

In a 3D image display mode, the first display area may display the first image, and the second display area may display the second image.

In some embodiments, when the processor 139 selects the display mode from the 2D image display mode and the 3D image display mode for image display, it may be configured to:
display the first image in both the first display area and the second display area; and
display the second image in the second display area after the first image is displayed in the second display area to meet a preset display condition.

In some embodiments, the preset display condition that the first image is displayed to meet may include:
displaying the first image for a preset number of frames, and/or, displaying the first image for a preset time.

In some embodiments, the image display device may include head-mounted glasses, with the first display area being used for viewing by the user's left eye, and the second display area being used for viewing by the user's right eye.

In some embodiments, the image display mode switching condition may include at least one of:
an image capturing condition of the image capture device;
an image transmission condition of the image capture device transmitting captured images to the image display device; or
display mode indication information received by the image display device, where the display mode indication information is used to instruct the image display device to select the 2D image display mode or the 3D image display mode.

In some embodiments, the image capture device may be provided at a movable platform, and the image capturing condition may include the distance between the movable platform and the target object being captured.

In some embodiments, when the distance between the movable platform and the target object being captured is greater than a first distance threshold, the image display device may be controlled to select the 2D image display mode for image display.

When the distance between the movable platform and the target object being captured is less than a second distance threshold, the image display device may be controlled to select the 3D image display mode for image display.

In some embodiments, the movable platform may include an aerial vehicle, a vehicle, a ship, or a robot.

In some embodiments, the movable platform may include an aerial vehicle, and the image capturing condition may further include the flight altitude of the aerial vehicle.

In some embodiments, the image capture device and the image display device may communicate wirelessly, and the image transmission condition may include at least one of:
signal transmission quality between the image capture device and the image display device;
a communication distance between the image capture device and the image display device; or
bandwidths used to transmit the first image and the second image.

In some embodiments, when the signal transmission quality is less than a first quality threshold, the image display device may be controlled to select the 2D image display mode for image display; and/or,
when the signal transmission quality is greater than a second quality threshold, the image display device may be controlled to select the 3D image display mode for image display.

In some embodiments, when the communication distance is greater than a first communication distance threshold, the image display device may be controlled to select the 2D image display mode for image display; and/or,
when the communication distance is less than a second communication distance threshold, the image display device may be controlled to select the 3D image display mode for image display.

In some embodiments, when the difference between the bandwidth used to transmit the first image and the bandwidth used to transmit the second image is greater than a first bandwidth difference threshold, the image display device may be controlled to select the 2D image display mode for image display; and/or
when the difference between the bandwidth used to transmit the first image and the bandwidth used to transmit the second image is less than a second bandwidth difference threshold, the image display device may be controlled to select the 3D image display mode for image display.

In some embodiments, the display mode indication information and the image captured by the image capture device may be simultaneously transmitted to the image display device.

In some embodiments, the processor 139 may be further configured to:
when the image display mode switching condition is met, control the image display device to display user prompt information, where the user prompt information is used to remind the user of the image display mode selected by the image display device.

In some embodiments, the processor 139 may be further configured to:
in response to the user confirming the image display mode selected by the image display device, control the image display device to display the image in the image display mode confirmed by the user.

In other embodiments, the processor 139 may be configured to run a computer program stored in the memory 138, and, when executing the computer program, may be further configured to:
obtaining a first image and a second image simultaneously captured by the image capture device of a target object; where the first image is captured by a first capture module of the image capture device, and the second image is captured by a second capture module of the image capture device, and the field of view of the first capture module and the second capture module partially overlap;
splice the first image and the second image together according to a preset direction to obtain a target image; and
transmit the target image to the image display device for display in the 3D image display mode.

In some embodiments, the hardware parameters of the first capture module may be the same as the hardware parameters of the second capture module. In some embodiments, the hardware parameters may include at least one of clock frequency, focus, exposure, white balance, and tone parameters.

In some embodiments, the first capture module may include a first image sensor, and the second capture module may include a second image sensor, where the first image sensor and the second image sensor have the same hardware parameters.

In some embodiments, the first image sensor and the second image sensor may share the same image processor.

In some embodiments, the preset direction may include a left-right direction.

In some embodiments, in the target image, the image quality parameters of symmetrically positioned image regions may be identical.

In some embodiments, the image quality parameters may include bitrate or quantization parameters.

In some embodiments, the processor 139, in addition to splicing the first image and the second image in the left-right direction, may be further configured to:

insert a connection image between the first image and the second image, where the first image is spliced with the second image through the connection image.

In some embodiments, after the target image is transmitted to the image display device, the image display device may split the target image to obtain the first image and the second image.

In some embodiments, the image display device may include a first display area and a second display area, which are arranged in the preset direction. The image display device may display the first image in the first display area and the second image in the second display area.

In some embodiments, the image display device may include head-mounted glasses, where the first display area is for viewing with the user's left eye and the second display area is for viewing with the user's right eye.

It should be noted that those skilled in the art will understand that, for the sake of convenience and brevity, the specific working process of the image capture device described above may be referred to the corresponding process in the foregoing image processing method embodiments, and will not be repeated here.

Refer to FIG. 9, where FIG. 9 is a schematic block diagram of a movable platform provided by embodiments of the present disclosure.

As shown in FIG. 9, the movable platform 100 includes an image capture device 130, a memory 101, and a processor 102. The image capture device 130, the memory 101, and the processor 102 are connected via a bus 103, such as an I2C (Inter-integrated Circuit) bus.

The processor 102 may be a microcontroller unit (MCU), a central processing unit (CPU), or a digital signal processor (DSP), etc.

The memory 101 may be a flash chip, a read-only memory (ROM), an optical disk, a USB flash drive, or a portable hard drive, etc.

The processor 102 may be used to run a computer program stored in the memory 131, and when executing the computer program, configured to perform:
obtaining an image captured by the movable platform, where: the movable platform includes a first capture module and a second capture module, the field of view of the first capture module and the second capture module partially overlap, the first capture module is used to capture a first image, and the second capture module is used to capture a second image; and
when the image display mode switching condition is met, controlling the image display device to select one display mode from the 2D image display mode and the 3D image display mode for image display, where: in the 2D image display mode, the image captured by the first capture module is used for display, and in the 3D image display mode, the image captured by the first capture module and the image captured by the second capture module are used for display.

In some embodiments, the image display device may include a first display area and a second display area.

In a 2D image display mode, both the first display area and the second display area may display the same image.

In a 3D image display mode, the first display area may display the first image, and the second display area may display the second image.

In some embodiments, when the processor 102 selects the display mode from the 2D image display mode and the 3D image display mode for image display, it may be configured to:
display the first image in both the first display area and the second display area; and
display the second image in the second display area after the first image is displayed in the second display area to meet a preset display condition.

In some embodiments, the preset display condition that the first image is displayed to meet may include:
displaying the first image for a preset number of frames, and/or, displaying the first image for a preset time.

In some embodiments, the image display device may include head-mounted glasses, with the first display area being used for viewing by the user's left eye, and the second display area being used for viewing by the user's right eye.

In some embodiments, the image display mode switching condition may include at least one of:
an image capturing condition of the image capture device;
an image transmission condition of the image capture device transmitting captured images to the image display device; or
display mode indication information received by the image display device, where the display mode indication information is used to instruct the image display device to select the 2D image display mode or the 3D image display mode.

In some embodiments, the movable platform may be provided at the movable platform, and the image capturing condition may include the distance between the movable platform and the target object being captured.

In some embodiments, when the distance between the movable platform and the target object being captured is greater than a first distance threshold, the image display device may be controlled to select the 2D image display mode for image display.

When the distance between the movable platform and the target object being captured is less than a second distance threshold, the image display device may be controlled to select the 3D image display mode for image display.

In some embodiments, the movable platform may include an aerial vehicle, a vehicle, a ship, or a robot.

In some embodiments, the movable platform may include an aerial vehicle, and the image capturing condition may further include the flight altitude of the aerial vehicle.

In some embodiments, the movable platform and the image display device may communicate wirelessly, and the image transmission condition may include at least one of:
signal transmission quality between the movable platform and the image display device;
a communication distance between the movable platform and the image display device; or
bandwidths used to transmit the first image and the second image.

In some embodiments, when the signal transmission quality is less than a first quality threshold, the image display device may be controlled to select the 2D image display mode for image display; and/or,
when the signal transmission quality is greater than a second quality threshold, the image display device may be controlled to select the 3D image display mode for image display.

In some embodiments, when the communication distance is greater than a first communication distance threshold, the image display device may be controlled to select the 2D image display mode for image display; and/or,
when the communication distance is less than a second communication distance threshold, the image display device may be controlled to select the 3D image display mode for image display.

In some embodiments, when the difference between the bandwidth used to transmit the first image and the bandwidth used to transmit the second image is greater than a first bandwidth difference threshold, the image display device may be controlled to select the 2D image display mode for image display; and/or
when the difference between the bandwidth used to transmit the first image and the bandwidth used to transmit the second image is less than a second bandwidth difference threshold, the image display device may be controlled to select the 3D image display mode for image display.

In some embodiments, the display mode indication information and the image captured by the movable platform may be simultaneously transmitted to the image display device.

In some embodiments, the processor 102 may be further configured to:
when the image display mode switching condition is met, control the image display device to display user prompt information, where the user prompt information is used to remind the user of the image display mode selected by the image display device.

In some embodiments, the processor 102 may be further configured to:
in response to the user confirming the image display mode selected by the image display device, control the image display device to display the image in the image display mode confirmed by the user.

In other embodiments, the processor 102 may be configured to run a computer program stored in the memory 131, and, when executing the computer program, may be further configured to:
obtaining a first image and a second image simultaneously captured by the movable platform of a target object, where the first image is captured by a first capture module of the movable platform, and the second image is captured by a second capture module of the movable platform, and the field of view of the first capture module and the second capture module partially overlap;
splice the first image and the second image together according to a preset direction to obtain a target image; and
transmit the target image to the image display device for display in the 3D image display mode.

In some embodiments, the hardware parameters of the first capture module may be the same as the hardware parameters of the second capture module. In some embodiments, the hardware parameters may include at least one of clock frequency, focus, exposure, white balance, and tone parameters.

In some embodiments, the first capture module may include a first image sensor, and the second capture module may include a second image sensor, where the first image sensor and the second image sensor have the same hardware parameters.

In some embodiments, the first image sensor and the second image sensor may share the same image processor.

In some embodiments, the preset direction may include a left-right direction.

In some embodiments, in the target image, the image quality parameters of symmetrically positioned image regions may be identical.

In some embodiments, the image quality parameters may include bitrate or quantization parameters.

In some embodiments, the processor 102, in addition to splicing the first image and the second image in the left-right direction, may be further configured to:
insert a connection image between the first image and the second image, where the first image is spliced with the second image through the connection image.

In some embodiments, after the target image is transmitted to the image display device, the image display device may split the target image to obtain the first image and the second image.

In some embodiments, the image display device may include a first display area and a second display area, which are arranged in the preset direction. The image display device may display the first image in the first display area and the second image in the second display area.

In some embodiments, the image display device may include head-mounted glasses, where the first display area is for viewing with the user's left eye and the second display area is for viewing with the user's right eye.

It should be noted that those skilled in the art will understand that, for the sake of convenience and brevity, the specific working process of the movable platform described above may be referred to the corresponding process in the foregoing image processing method embodiments, and will not be repeated here.

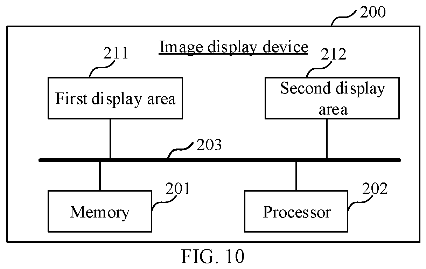

Refer to FIG. 10, where FIG. 10 is a schematic block diagram of an image display device provided by embodiments of the present disclosure.

As shown in FIG. 10, the image display device 200 includes a first display area 211, a second display area 212, a memory 201, and a processor 202. The image capture device 130, the memory 201, and the processor 202 are connected via a bus 203, such as an I2C (Inter-integrated Circuit) bus.

The processor 202 may be a microcontroller unit (MCU), a central processing unit (CPU), or a digital signal processor (DSP), etc.

The memory 201 may be a flash chip, a read-only memory (ROM), a magnetic disk, an optical disk, a USB flash drive, or a portable hard drive, etc.

The processor 202 may be used to run a computer program stored in the memory 201, and when executing the computer program, configured to perform:
obtaining an image captured by the movable platform, where: the movable platform includes a first capture module and a second capture module, the field of view of the first capture module and the second capture module partially overlap, the first capture module is used to capture a first image, and the second capture module is used to capture a second image; and
when the image display mode switching condition is met, controlling the image display device to select one display mode from the 2D image display mode and the 3D image display mode for image display, where: in the 2D image display mode, the image captured by the first capture module is used for display, and in the 3D image display mode, the image captured by the first capture module and the image captured by the second capture module are used for display.

In some embodiments, the image display device may include a first display area and a second display area.

In a 2D image display mode, both the first display area and the second display area may display the same image.

In a 3D image display mode, the first display area may display the first image, and the second display area may display the second image.

In some embodiments, when the processor 202 selects the display mode from the 2D image display mode and the 3D image display mode for image display, it may be configured to:
display the first image in both the first display area and the second display area; and
display the second image in the second display area after the first image is displayed in the second display area to meet a preset display condition.

In some embodiments, the preset display condition that the first image is displayed to meet may include:
displaying the first image for a preset number of frames, and/or, displaying the first image for a preset time.

In some embodiments, the image display device may include head-mounted glasses, with the first display area being used for viewing by the user's left eye, and the second display area being used for viewing by the user's right eye.

In some embodiments, the image display mode switching condition may include at least one of:
an image capturing condition of the image capture device;
an image transmission condition of the image capture device transmitting captured images to the image display device; or
display mode indication information received by the image display device, where the display mode indication information is used to instruct the image display device to select the 2D image display mode or the 3D image display mode.

In some embodiments, the image capture device may be provided at the movable platform, and the image capturing condition may include the distance between the movable platform and the target object being captured.

In some embodiments, when the distance between the movable platform and the target object being captured is greater than a first distance threshold, the image display device may be controlled to select the 2D image display mode for image display.

When the distance between the movable platform and the target object being captured is less than a second distance threshold, the image display device may be controlled to select the 3D image display mode for image display.

In some embodiments, the movable platform may include an aerial vehicle, a vehicle, a ship, or a robot.

In some embodiments, the movable platform may include an aerial vehicle, and the image capturing condition may further include the flight altitude of the aerial vehicle.

In some embodiments, the movable platform and the image display device may communicate wirelessly, and the image transmission condition may include at least one of:
signal transmission quality between the movable platform and the image display device;
a communication distance between the movable platform and the image display device; or
bandwidths used to transmit the first image and the second image.

In some embodiments, when the signal transmission quality is less than a first quality threshold, the image display device may be controlled to select the 2D image display mode for image display; and/or,
when the signal transmission quality is greater than a second quality threshold, the image display device may be controlled to select the 3D image display mode for image display.

In some embodiments, when the communication distance is greater than a first communication distance threshold, the image display device may be controlled to select the 2D image display mode for image display; and/or,
when the communication distance is less than a second communication distance threshold, the image display device may be controlled to select the 3D image display mode for image display.

In some embodiments, when the difference between the bandwidth used to transmit the first image and the bandwidth used to transmit the second image is greater than a first bandwidth difference threshold, the image display device may be controlled to select the 2D image display mode for image display; and/or
when the difference between the bandwidth used to transmit the first image and the bandwidth used to transmit the second image is less than a second bandwidth difference threshold, the image display device may be controlled to select the 3D image display mode for image display.

In some embodiments, the display mode indication information and the image captured by the movable platform may be simultaneously transmitted to the image display device.

In some embodiments, the processor 202 may be further configured to:
when the image display mode switching condition is met, control the image display device to display user prompt information, where the user prompt information is used to remind the user of the image display mode selected by the image display device.

In some embodiments, the processor 202 may be further configured to:
in response to the user confirming the image display mode selected by the image display device, control the image display device to display the image in the image display mode confirmed by the user.

In other embodiments, the processor 202 may be configured to run a computer program stored in the memory 131, and, when executing the computer program, may be further configured to:
obtaining a first image and a second image simultaneously captured by the movable platform of a target object, where the first image is captured by a first capture module of the movable platform, and the second image is captured by a second capture module of the movable platform, and the field of view of the first capture module and the second capture module partially overlap;
splice the first image and the second image together according to a preset direction to obtain a target image; and
transmit the target image to the image display device for display in the 3D image display mode.

In some embodiments, the hardware parameters of the first capture module may be the same as the hardware parameters of the second capture module. In some embodiments, the hardware parameters may include at least one of clock frequency, focus, exposure, white balance, and tone parameters.

In some embodiments, the first capture module may include a first image sensor, and the second capture module may include a second image sensor, where the first image sensor and the second image sensor have the same hardware parameters.

In some embodiments, the first image sensor and the second image sensor may share the same image processor.

In some embodiments, the preset direction may include a left-right direction.

In some embodiments, in the target image, the image quality parameters of symmetrically positioned image regions may be identical.

In some embodiments, the image quality parameters may include bitrate or quantization parameters.

In some embodiments, the processor 202, in addition to splicing the first image and the second image in the left-right direction, may be further configured to:
insert a connection image between the first image and the second image, where the first image is spliced with the second image through the connection image.

In some embodiments, after the target image is transmitted to the image display device, the image display device may split the target image to obtain the first image and the second image.

In some embodiments, the image display device may include a first display area and a second display area, which are arranged in the preset direction. The image display device may display the first image in the first display area and the second image in the second display area.

In some embodiments, the image display device may include head-mounted glasses, where the first display area is for viewing with the user's left eye and the second display area is for viewing with the user's right eye.

It should be noted that those skilled in the art will understand that, for the sake of convenience and brevity, the specific working process of the movable platform described above may be referred to the corresponding process in the foregoing image processing method embodiments, and will not be repeated here.

The present disclosure also provides a computer-readable storage medium storing a computer program. The computer program may include program instructions, and a processor executing the program instructions to implement the steps of the image processing method provided in the above embodiments.

The computer-readable storage medium may be an internal storage unit of the image capture device, movable platform, or image display device described in any of the foregoing embodiments, such as a hard disk or memory of the image capture device, movable platform, or image display device. The computer-readable storage medium may also be an external storage device of the image capture device, movable platform, or image display device, such as a plug-in hard disk, smart media card (SMC), secure digital (SD) card, flash card, etc., equipped on the image capture device, movable platform, or image display device.

It should be understood that the terminology used in this specification is for the purpose of describing particular embodiments only and is not intended to limit the scope of the present disclosure. As used in this specification and the appended claims, unless the context clearly indicates otherwise, the singular forms "a," "an," and "the" are intended to include the plural forms. It should also be understood that the term "and/or" as used in the specification and the appended claims means any combination of one or more of the associated listed items and all possible combinations, and includes such combinations.

The embodiments of the present disclosure have been described above. However, these embodiments are for illustrative purposes only and are not intended to limit the scope of the present disclosure. Although various embodiments have been described above, this does not mean that the measures in the various embodiments cannot be used advantageously in combination. Various substitutions and modifications may be made by those skilled in the art without departing from the scope of the present disclosure, and all such substitutions and modifications should fall within the scope of the present disclosure.

## Claims

1. An image processing method comprising:
obtaining an image captured by an image capture device; wherein: the image capture device includes a first capture module and a second capture module, fields of view of the first capture module and the second capture module partially overlap, the first capture module is used to capture a first image, and the second capture module is used to capture a second image; and
when an image display mode switching condition is met, controlling an image display device to select one image display mode of a 2D image display mode and a 3D image display mode for image display, wherein: the image captured by the first capture module is used for display in the 2D image display mode, and the image captured by the first capture module and the image captured by the second capture module are used for display in the 3D image display mode.

2. The image processing method according to claim 1, wherein:
the image display device includes a first display area and a second display area;
in the 2D image display mode, both the first display area and the second display area display the same image; and
in the 3D image display mode, the first display area displays the first image, and the second display area displays the second image.

3. The image processing method according to claim 2, wherein selecting the display mode from the 2D image display mode and the 3D image display mode for image display includes:
displaying the first image in both the first display area and the second display area; and
displaying the second image in the second display area after displaying of the first image in the second display area meets a preset display condition.

4. The image processing method according to claim 3, wherein displaying of the first image in the second display area meeting the preset display condition includes:
a number of frames displayed for the first image reaches a preset number of frames, and/or a time for displaying the first image reaches a preset time.

5. The image processing method according to any one of claims 2 to 4, wherein:
the image display device includes head-mounted glasses, with the first display area for viewing by the user's left eye and the second display area for viewing by the user's right eye.

6. The image processing method according to claim 1, wherein the image display mode switching condition includes at least one of:
an image capturing condition of the image capture device;
an image transmission condition of the image capture device transmitting captured images to the image display device; or
display mode indication information received by the image display device, wherein the display mode indication information is used to instruct the image display device to select the 2D image display mode or the 3D image display mode.

7. The image processing method according to claim 6, wherein:
the image capture device is provided at a movable platform, and the image capturing condition includes a distance between the movable platform and a target object being captured.

8. The image processing method according to claim 7, wherein:
when the distance between the movable platform and the target object being captured is greater than a first distance threshold, the image display device is controlled to select the 2D image display mode for image display; and
when the distance between the movable platform and the target object being captured is less than a second distance threshold, the image display device is controlled to select the 3D image display mode for image display.

9. The image processing method according to claim 7, wherein:
the movable platform includes an aerial vehicle, a vehicle, a ship, or a robot.

10. The image processing method according to claim 7, wherein:
the movable platform includes an aerial vehicle, and the image capturing condition further includes a flight altitude of the aerial vehicle.

11. The image processing method according to claim 6, wherein:
the image capture device and the image display device communicate wirelessly; and
the image transmission condition includes at least one of:
a signal transmission quality between the movable platform and the image display device;
a communication distance between the movable platform and the image display device; or
bandwidths used to transmit the first image and the second image.

12. The image processing method according to claim 11, wherein:
when the signal transmission quality is less than a first quality threshold, the image display device is controlled to select the 2D image display mode for image display; and/or,
when the signal transmission quality is greater than a second quality threshold, the image display device is controlled to select the 3D image display mode for image display.

13. The image processing method according to claim 11, wherein:
when the communication distance is greater than a first communication distance threshold, the image display device is controlled to select the 2D image display mode for image display; and/or,
when the communication distance is less than a second communication distance threshold, the image display device is controlled to select the 3D image display mode for image display.

14. The image processing method according to claim 11, wherein:
when the difference between the bandwidth used to transmit the first image and the bandwidth used to transmit the second image is greater than a first bandwidth difference threshold, the image display device is controlled to select the 2D image display mode for image display; and/or,
when the difference between the bandwidth used to transmit the first image and the bandwidth used to transmit the second image is less than a second bandwidth difference threshold, the image display device is controlled to select the 3D image display mode for image display.

15. The image processing method according to claim 6, wherein:
the display mode indication information and the image captured by the image capture device are simultaneously transmitted to the image display device.

16. The image processing method according to claim 1, further comprising:
when the image display mode switching condition is met, controlling the image display device to display user prompt information, wherein the user prompt information is used to remind a user of the image display mode selected by the image display device.

17. The image processing method according to claim 16, further comprising:
in response to the user confirming the image display mode selected by the image display device, controlling the image display device to display the image in the image display mode confirmed by the user.

18. An image processing method comprising:
obtaining a first image and a second image simultaneously captured by an image capture device of a target object, wherein the first image is captured by a first capture module of the image capture device, and the second image is captured by a second capture module of the image capture device, and fields of view of the first capture module and the second capture module partially overlap;
splicing the first image and the second image together according to a preset direction to obtain a target image; and
transmitting the target image to the image display device for display in a 3D image display mode.

19. The image processing method according to claim 18, wherein:
hardware parameters of the first capture module are same as hardware parameters of the second capture module.

20. The image processing method according to claim 19, wherein:
the hardware parameters include at least one of clock frequency, focus, exposure, white balance, or a tone parameter.

21. The image processing method according to claim 19 or 20, wherein:
the first capture module includes a first image sensor, and the second capture module includes a second image sensor, wherein the first image sensor and the second image sensor have same hardware parameters.

22. The image processing method according to claim 21, wherein:
the first image sensor and the second image sensor share a same image processor.

23. The image processing method according to claim 18, wherein:
the preset direction includes a left-right direction.

24. The image processing method according to claim 23, wherein:
in the target image, image quality parameters of image regions symmetrical along the left-right direction are same.

25. The image processing method according to claim 24, wherein:
the image quality parameters include bitrate or quantization parameter.

26. The image processing method according to claim 23, wherein splicing the first image and the second image in the left-right direction further includes:
inserting a connection image between the first image and the second image, wherein the first image is spliced with the second image through the connection image.

27. The image processing method according to claim 18, further comprising:
after the target image is transmitted to the image display device, splitting the target image to obtain the first image and the second image.

28. The image processing method according to claim 27, wherein:
the image display device includes a first display area and a second display area, which are arranged in the preset direction; and
the image processing method further includes displaying the first image in the first display area and displaying the second image in the second display area.

29. The image processing method according to claim 28, wherein:
the image display device includes head-mounted glasses, the first display area is for viewing with the user's left eye, and the second display area is for viewing with the user's right eye.

30. An image capture device comprising:
a first capture module and a second capture module, wherein fields of view of the first capture module and the second capture module partially overlap;
a memory, configured to store a computer program; and
a processor, configured to execute the computer program, and, when executing the computer program, implement the method according to any one of claims 1 to 26.

31. A movable platform comprising:
an image capture device including a first capture module and a second capture module, wherein fields of view of the first capture module and the second capture module partially overlap;
a memory, configured to store a computer program; and
a processor, configured to execute the computer program, and, when executing the computer program, implement the method according to any one of claims 1 to 26.

32. The movable platform according to claim 31, wherein the movable platform includes an aerial vehicle, a vehicle, a ship, or a robot.

33. An image display device comprising:
a first display area and a second display area;
a memory, configured to store a computer program; and
a processor, configured to execute the computer program, and, when executing the computer program, implement the method according to any one of claims 27 to 29.

34. The image display device according to claim 33, wherein the image display device includes head-mounted glasses.
